# EUROPEAN PATENT SPECIFICATION

(11) **EP 2 982 205 B1**
(45) Date of publication and mention of the grant of the patent: **12.06.2019**
(21) Application number: 14726040.0
(22) Date of filing: 03.04.2014
(51) Int. Cl.: H04L 5/00, H04L 1/18, H04W 92/20

(54) **METHODS AND APPARATUS FOR TRANSMISSION RESTRICTION AND EFFICIENT SIGNALING**
VERFAHREN UND VORRICHTUNG ZUR SENDEEINSCHRÄNKUNG UND EFFIZIENTEN SIGNALISIERUNG
PROCÉDÉS ET APPAREIL DE LIMITATION D'ÉMISSION ET DE SIGNALISATION EFFICIENTE

(30) Priority: 05.04.2013 US 201361809044 P; 02.04.2014 US 201414243780
(43) Date of publication of application: 10.02.2016
(73) Proprietor: Qualcomm Incorporated, San Diego, CA 92121-1714 (US)
(72) Inventor: LUO, Tao, San Diego, California 92121-1714 (US); CHEN, Wanshi, San Diego, California 92121-1714 (US); YOO, Taesang, San Diego, California 92121-1714 (US); XU, Hao, San Diego, California 92121-1714 (US); WEI, Yongbin, San Diego, California 92121-1714 (US); MALLADI, Durga Prasad, San Diego, California 92121-1714 (US); BANISTER, Brian Clarke, San Diego, California 92121-1714 (US); MCCLOUD, Michael Lee, San Diego, California 92121-1714 (US); DAMNJANOVIC, Aleksandar, San Diego, California 92121-1714 (US); GAAL, Peter, San Diego, California 92121-1714 (US); CHENDAMARAI KANNAN, Arumugam, San Diego, California 92121-1714 (US)
(74) Representative: Wegner, Hans
(86) International application number: PCT/US2014/032794
(87) International publication number: WO 2014/165655

(56) References cited:
- WO-A1-2011/088465
- WO-A1-2011/130447
- CA-A1- 2 823 145
- US-A1- 2011 085 508
- US-A1- 2012 057 480
- US-A1- 2012 115 469
- US-A1- 2013 077 578

## Description

### BACKGROUND

### Field

The present disclosure relates generally to communication systems, and more particularly, to methods and apparatus for restriction of system operating parameters and sending the restricted set of parameters to a receiver for efficient signaling.

### Background

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power). Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency divisional multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example of an emerging telecommunication standard is Long Term Evolution (LTE). LTE/LTE-Advanced is a set of enhancements to the Universal Mobile Telecommunications System (UMTS) mobile standard promulgated by Third Generation Partnership Project (3GPP). It is designed to better support mobile broadband Internet access by improving spectral efficiency, lower costs, improve services, make use of new spectrum, and better integrate with other open standards using OFDMA on the downlink (DL), SC-FDMA on the uplink (UL), and multiple-input multiple-output (MIMO) antenna technology. However, as the demand for mobile broadband access continues to increase, there exists a need for further improvements in LTE technology. Preferably, these improvements should be applicable to other multi-access technologies and the telecommunication standards that employ these technologies.

A wireless communication network may include a number of base stations that can support communication for a number of user equipments (UEs). A UE may communicate with a base station via the downlink and uplink. The downlink (or forward link) refers to the communication link from the base station to the UE, and the uplink (or reverse link) refers to the communication link from the UE to the base station.

A base station may transmit data to one or more UEs on the downlink and may receive data from one or more UEs on the uplink. On the downlink, a data transmission from the base station may observe interference due to data transmissions from neighbor base stations. On the uplink, a data transmission from a UE may observe interference due to data transmissions from other UEs communicating with the neighbor base stations. For both the downlink and uplink, the interference due to the interfering base stations and the interfering UEs may degrade performance.

US 2012/0057480 A1 relates to a UE receiver reference signal processing that utilizes resource partitioning information. According to this document, communication in a dominant interference scenario may be supported by performing inter-cell interference coordination (ICIC). According to certain aspects of ICIC, resource coordination/partitioning may be performed to allocate resources to a serving Node B located near the vicinity of a strong interfering Node B. The interfering Node B may avoid transmitting on the allocated/protected resources, but transmissions from the interfering Node B on resources not allocated to the serving Node B (i.e., unprotected) may cause significant interference on cell-specific reference signal (CRS) tones of the serving Node B. Therefore, if the CRS tones of the unallocated/unprotected resources are used, performance degradation may result to various operations of the serving Node B. Therefore, certain aspects of the present disclosure provide techniques for a UE receiver in utilizing resource partitioning information (RPI) for performing CRS processing in a heterogeneous network (HetNet).

US 2012/115469 A1 relates to a method for UE pattern indication and measurement for interference coordination.

US 2013/077578 A1 relates to signaling of other-cell signal's configuration information to facilitate interference cancellation at a mobile terminal.

WO 2011/130447 A1 relates to resource partitioning information for enhanced interference coordination.

CA 2823145 A1 relates to radio base station apparatus, mobile terminal apparatus and radio communication method.

WO 2011/088465 A1 relates to methods and apparatus for facilitating inter-cell interference coordination via over the air load indicator and relative narrowband transmit power.

US 2011/0085508 A1 relates to resource allocation size dependent transport block size signaling.

### SUMMARY

The present disclosure provides methods and apparatus for restriction of system operating parameters and sending the restricted set of parameters to a receiver for efficient signaling.

Certain aspects of the present disclosure provide a method for wireless communications by a serving base station (BS). The method generally includes determining information regarding a restricted set of system parameters used for transmission from at least one of the serving BS or one or more potentially interfering BSs and signaling the information to a user equipment (UE).

Certain aspects of the present disclosure provide a method for wireless communications by a user equipment (UE). The method generally includes receiving signaling of information regarding a restricted set of system parameters used for transmission from at least one of a serving base station (BS) or one or more potentially interfering BSs and using the information to suppress interference by transmissions from the one or more potentially interfering BSs or serving BS.

Certain aspects of the present disclosure provide an apparatus for wireless communications by a serving base station (BS). The apparatus generally includes means for determining information regarding a restricted set of system parameters used for transmission from at least one of the serving BS or one or more potentially interfering BSs and means for signaling the information to a user equipment (UE).

Certain aspects of the present disclosure provide an apparatus for wireless communications by a user equipment (UE). The apparatus generally includes means for receiving signaling of information regarding a restricted set of system parameters used for transmission from at least one of a serving base station (BS) or one or more potentially interfering BSs and means for using the information to suppress interference by transmissions from the one or more potentially interfering BSs or serving BS.

Certain aspects of the present disclosure provide an apparatus for wireless communications by a serving base station (BS). The apparatus generally includes at least one processor configured to determine information regarding a restricted set of system parameters used for transmission from at least one of the serving BS or one or more potentially interfering BSs and signal the information to a user equipment (UE). The apparatus also includes a memory coupled with the at least one processor.

Certain aspects of the present disclosure provide an apparatus for wireless communications by a user equipment (UE). The apparatus generally includes at least one processor configured to receive signaling of information regarding a restricted set of system parameters used for transmission from at least one of a serving base station (BS) or one or more potentially interfering BSs and use the information to suppress interference by transmissions from the one or more potentially interfering BSs or serving BS. The apparatus also includes a memory coupled with the at least one processor.

Certain aspects of the present disclosure provide a computer program product for wireless communications by a serving base station (BS). The computer program product generally includes a computer readable medium having instructions stored thereon, the instructions executable by one or more processors, for determining information regarding a restricted set of system parameters used for transmission from at least one of the serving BS or one or more potentially interfering BSs and signaling the information to a user equipment (UE).

Certain aspects of the present disclosure provide a computer program product for wireless communications by a user equipment (UE). The computer program product generally includes a computer readable medium having instructions stored thereon, the instructions executable by one or more processors for receiving signaling of information regarding a restricted set of system parameters used for transmission from at least one of a serving base station (BS) or one or more potentially interfering BSs and using the information to suppress interference by transmissions from the one or more potentially interfering BSs or serving BS.

Various aspects and features of the disclosure are described in further detail below.

### BRIEF DESCRIPTION OF THE DRAWINGS

So that the manner in which the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects.
FIG. 1 is a diagram illustrating an example of a network architecture, in accordance with certain aspects of the disclosure.
FIG. 2 is a diagram illustrating an example of an access network, in accordance with certain aspects of the disclosure.
FIG. 3 is a diagram illustrating an example of a downlink (DL) frame structure in long-term evolution (LTE), in accordance with certain aspects of the disclosure.
FIG. 4 is a diagram illustrating an example of an uplink (UL) frame structure in LTE, in accordance with certain aspects of the disclosure.
FIG. 5 is a diagram illustrating an example of a radio protocol architecture for the user plane and control plane, in accordance with certain aspects of the disclosure.
FIG. 6 is a diagram illustrating an example of an evolved Node B (eNB) and user equipment (UE) in an access network, in accordance with certain aspects of the disclosure.
FIG. 7 is a diagram illustrating evolved multicast broadcast multimedia service (eMBMS) in a multimedia broadcast over a single frequency network (MBSFN), in accordance with certain aspects of the disclosure.

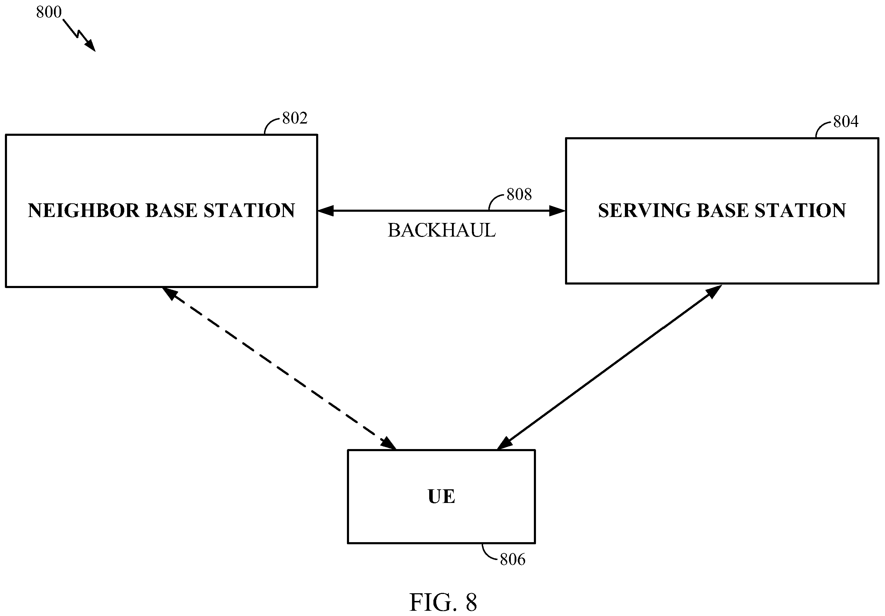

FIG. 8 illustrates example components of a wireless communication system, in accordance with certain aspects of the present disclosure.
FIG. 9 shows a flow diagram illustrating example operations for wireless communications performed by a base station (BS), in accordance with certain aspects of the present disclosure.
FIG. 10 shows a flow diagram illustrating example operations for wireless communications performed by a UE, in accordance with certain aspects of the present disclosure.

### DETAILED DESCRIPTION

Techniques and apparatus are provided herein for restriction of system operating parameters and sending the restricted set of parameters to a receiver for efficient signaling. According to certain aspects of the present disclosure, a serving cell may determine a restricted set of system operating parameters for the cell and for potentially inferring neighboring cells. The serving cell may signal the restricted set of system operating parameters to a receiver to be used for interference management and, thus, more efficient signaling.

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunication systems will now be presented with reference to various apparatus and methods. These apparatus and methods will be described in the following detailed description and illustrated in the accompanying drawings by various blocks, modules, components, circuits, steps, processes, algorithms, etc. (collectively referred to as "elements"). These elements may be implemented using hardware, software/firmware, or combinations thereof. Whether such elements are implemented as hardware or software depends upon the particular application and design constraints imposed on the overall system.

By way of example, an element, or any portion of an element, or any combination of elements may be implemented with a "processing system" that includes one or more processors. Examples of processors include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software/firmware, middleware, microcode, hardware description language, or otherwise.

Accordingly, in one or more exemplary embodiments, the functions described may be implemented in hardware, software/firmware, or combinations thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

### Example Wireless Communications Network

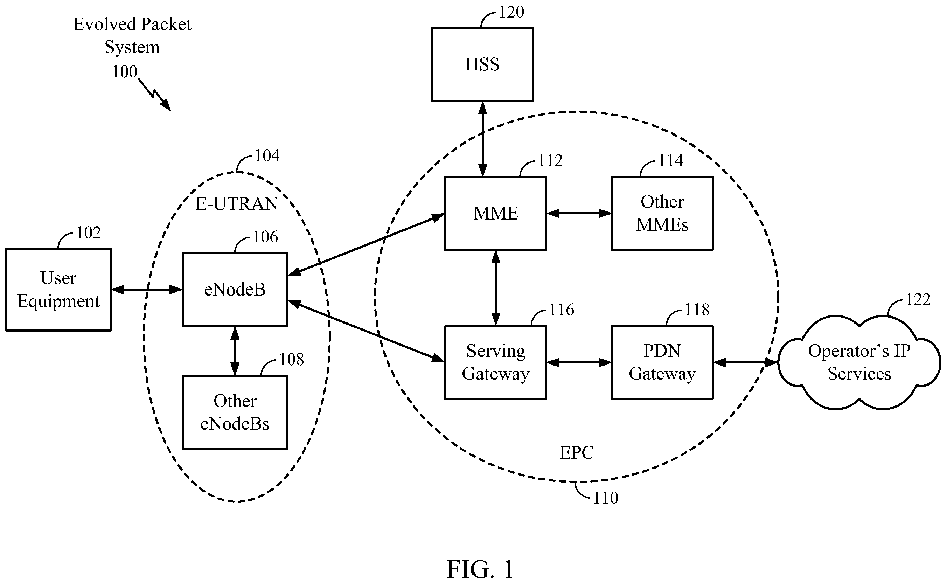

FIG. 1 is a diagram illustrating a long-term evolution (LTE) network architecture 100. The LTE network architecture 100 may be referred to as an Evolved Packet System (EPS) 100. The EPS 100 may include one or more user equipment (UE) 102, an Evolved UMTS Terrestrial Radio Access Network (E-UTRAN) 104, an Evolved Packet Core (EPC) 110, a Home Subscriber Server (HSS) 120, and an Operator's IP Services 122. The EPS can interconnect with other access networks, but for simplicity those entities/interfaces are not shown. Exemplary other access networks may include an IP Multimedia Subsystem (IMS) PDN, Internet PDN, Administrative PDN (e.g., Provisioning PDN), carrier-specific PDN, operator-specific PDN, and/or GPS PDN. As shown, the EPS provides packet-switched services, however, as those skilled in the art will readily appreciate, the various concepts presented throughout this disclosure may be extended to networks providing circuit-switched services.

The E-UTRAN includes the evolved Node B (eNB) 106 and other eNBs 108. The eNB 106 provides user and control plane protocol terminations toward the UE 102. The eNB 106 may be connected to the other eNBs 108 via an X2 interface (e.g., backhaul). The eNB 106 may also be referred to as a base station, a base transceiver station, a radio base station, a radio transceiver, a transceiver function, a basic service set (BSS), an extended service set (ESS), or some other suitable terminology. The eNB 106 provides an access point to the EPC 110 for a UE 102. Examples of UEs 102 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a netbook, a smart book, or any other similar functioning device. The UE 102 may also be referred to by those skilled in the art as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

The eNB 106 is connected by an S1 interface to the EPC 110. The EPC 110 includes a Mobility Management Entity (MME) 112, other MMEs 114, a Serving Gateway 116, and a Packet Data Network (PDN) Gateway 118. The MME 112 is the control node that processes the signaling between the UE 102 and the EPC 110. Generally, the MME 112 provides bearer and connection management. All user IP packets are transferred through the Serving Gateway 116, which itself is connected to the PDN Gateway 118. The PDN Gateway 118 provides UE IP address allocation as well as other functions. The PDN Gateway 118 is connected to the Operator's IP Services 122. The Operator's IP Services 122 may include, for example, the Internet, the Intranet, an IP Multimedia Subsystem (IMS), and a PS Streaming Service (PSS). In this manner, the UE102 may be coupled to the PDN through the LTE network.

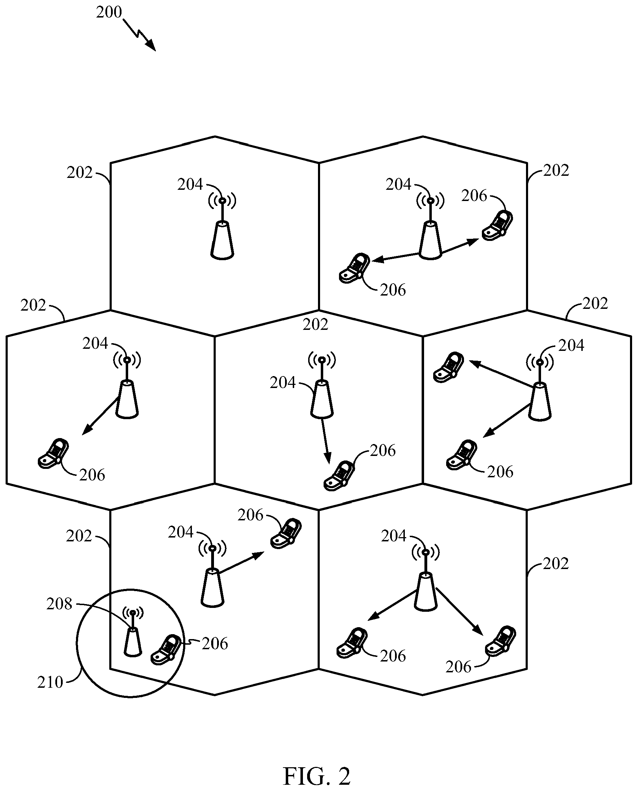

FIG. 2 is a diagram illustrating an example of an access network 200 in an LTE network architecture. In this example, the access network 200 is divided into a number of cellular regions (cells) 202. One or more lower power class eNBs 208 may have cellular regions 210 that overlap with one or more of the cells 202. A lower power class eNB 208 may be referred to as a remote radio head (RRH). The lower power class eNB 208 may be a femto cell (e.g., home eNB (HeNB)), pico cell, or micro cell. The macro eNBs 204 are each assigned to a respective cell 202 and are configured to provide an access point to the EPC 110 for all the UEs 206 in the cells 202. There is no centralized controller in this example of an access network 200, but a centralized controller may be used in alternative configurations. The eNBs 204 are responsible for all radio related functions including radio bearer control, admission control, mobility control, scheduling, security, and connectivity to the serving gateway 116.

The modulation and multiple access scheme employed by the access network 200 may vary depending on the particular telecommunications standard being deployed. In LTE applications, OFDM is used on the DL and SC-FDMA is used on the UL to support both frequency division duplexing (FDD) and time division duplexing (TDD). As those skilled in the art will readily appreciate from the detailed description to follow, the various concepts presented herein are well suited for LTE applications. However, these concepts may be readily extended to other telecommunication standards employing other modulation and multiple access techniques. By way of example, these concepts may be extended to Evolution-Data Optimized (EV-DO) or Ultra Mobile Broadband (UMB). EV-DO and UMB are air interface standards promulgated by the 3rd Generation Partnership Project 2 (3GPP2) as part of the CDMA2000 family of standards and employs CDMA to provide broadband Internet access to mobile stations. These concepts may also be extended to Universal Terrestrial Radio Access (UTRA) employing Wideband-CDMA (W-CDMA) and other variants of CDMA, such as TD-SCDMA; Global System for Mobile Communications (GSM) employing TDMA; and Evolved UTRA (E-UTRA), Ultra Mobile Broadband (UMB), IEEE 802.11 (Wi-Fi), IEEE 802.16 (WiMAX), IEEE 802.20, and Flash-OFDM employing OFDMA. UTRA, E-UTRA, UMTS, LTE and GSM are described in documents from the 3GPP organization. CDMA2000 and UMB are described in documents from the 3GPP2 organization. The actual wireless communication standard and the multiple access technology employed will depend on the specific application and the overall design constraints imposed on the system.

The eNBs 204 may have multiple antennas supporting MIMO technology. The use of MIMO technology enables the eNBs 204 to exploit the spatial domain to support spatial multiplexing, beamforming, and transmit diversity. Spatial multiplexing may be used to transmit different streams of data simultaneously on the same frequency. The data streams may be transmitted to a single UE 206 to increase the data rate or to multiple UEs 206 to increase the overall system capacity. This is achieved by spatially precoding each data stream (e.g., applying a scaling of an amplitude and a phase) and then transmitting each spatially precoded stream through multiple transmit antennas on the DL. The spatially precoded data streams arrive at the UE(s) 206 with different spatial signatures, which enables each of the UE(s) 206 to recover the one or more data streams destined for that UE 206. On the UL, each UE 206 transmits a spatially precoded data stream, which enables the eNB 204 to identify the source of each spatially precoded data stream.

Spatial multiplexing is generally used when channel conditions are good. When channel conditions are less favorable, beamforming may be used to focus the transmission energy in one or more directions. This may be achieved by spatially precoding the data for transmission through multiple antennas. To achieve good coverage at the edges of the cell, a single stream beamforming transmission may be used in combination with transmit diversity.

In the detailed description that follows, various aspects of an access network will be described with reference to a MIMO system supporting OFDM on the DL. OFDM is a spread-spectrum technique that modulates data over a number of subcarriers within an OFDM symbol. The subcarriers are spaced apart at precise frequencies. The spacing provides "orthogonality" that enables a receiver to recover the data from the subcarriers. In the time domain, a guard interval (e.g., cyclic prefix) may be added to each OFDM symbol to combat inter-OFDM-symbol interference. The UL may use SC-FDMA in the form of a DFT-spread OFDM signal to compensate for high peak-to-average power ratio (PAPR).

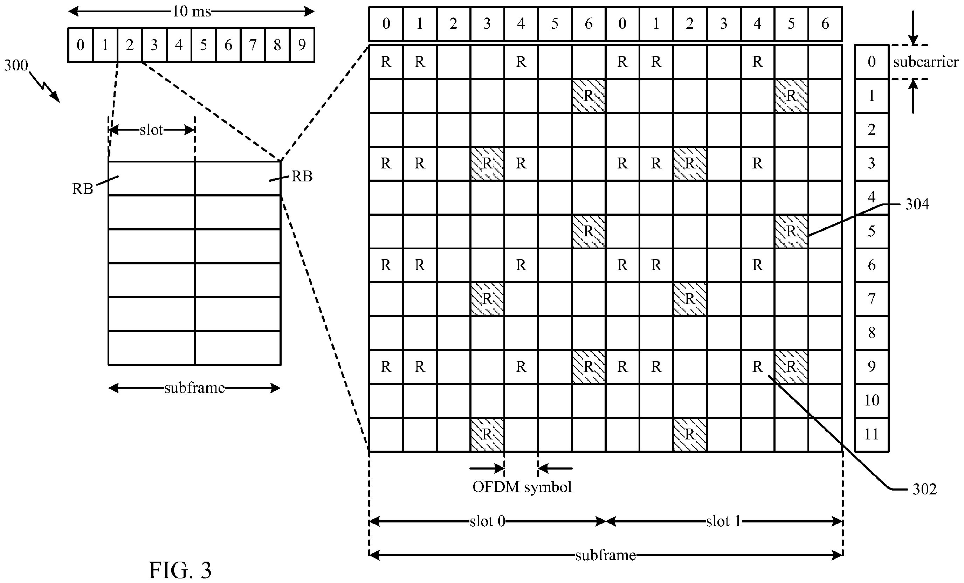

FIG. 3 is a diagram 300 illustrating an example of a DL frame structure in LTE. A frame (10 ms) may be divided into 10 equally sized sub-frames with indices of 0 through 9. Each sub-frame may include two consecutive time slots. A resource grid may be used to represent two time slots, each time slot including a resource block. The resource grid is divided into multiple resource elements. In LTE, a resource block contains 12 consecutive subcarriers in the frequency domain and, for a normal cyclic prefix in each OFDM symbol, 7 consecutive OFDM symbols in the time domain, or 84 resource elements. For an extended cyclic prefix, a resource block contains 6 consecutive OFDM symbols in the time domain and has 72 resource elements. Some of the resource elements, as indicated as R 302, 304, include DL reference signals (DL-RS). The DL-RS include Cell-specific RS (CRS) (also sometimes called common RS) 302 and UE-specific RS (UE-RS) 304. UE-RS 304 are transmitted only on the resource blocks upon which the corresponding physical DL shared channel (PDSCH) is mapped. The number of bits carried by each resource element depends on the modulation scheme. Thus, the more resource blocks that a UE receives and the higher the modulation scheme, the higher the data rate for the UE.

In LTE, an eNB may send a primary synchronization signal (PSS) and a secondary synchronization signal (SSS) for each cell in the eNB. The primary and secondary synchronization signals may be sent in symbol periods 6 and 5, respectively, in each of sub frames 0 and 5 of each radio frame with the normal cyclic prefix (CP). The synchronization signals may be used by UEs for cell detection and acquisition. The eNB may send a Physical Broadcast Channel (PBCH) in symbol periods 0 to 3 in slot 1 of subframe 0. The PBCH may carry certain system information.

The eNB may send a Physical Control Format Indicator Channel (PCFICH) in the first symbol period of each subframe. The PCFICH may convey the number of symbol periods (M) used for control channels, where M may be equal to 1, 2 or 3 and may change from subframe to subframe. M may also be equal to 4 for a small system bandwidth, e.g., with less than 10 resource blocks. The eNB may send a Physical HARQ Indicator Channel (PHICH) and a Physical Downlink Control Channel (PDCCH) in the first M symbol periods of each subframe. The PHICH may carry information to support hybrid automatic repeat request (HARQ). The PDCCH may carry information on resource allocation for UEs and control information for downlink channels. The eNB may send a Physical Downlink Shared Channel (PDSCH) in the remaining symbol periods of each subframe. The PDSCH may carry data for UEs scheduled for data transmission on the downlink.

The eNB may send the PSS, SSS, and PBCH in the center 1.08 MHz of the system bandwidth used by the eNB. The eNB may send the PCFICH and PHICH across the entire system bandwidth in each symbol period in which these channels are sent. The eNB may send the PDCCH to groups of UEs in certain portions of the system bandwidth. The eNB may send the PDSCH to specific UEs in specific portions of the system bandwidth. The eNB may send the PSS, SSS, PBCH, PCFICH, and PHICH in a broadcast manner to all UEs, may send the PDCCH in a unicast manner to specific UEs, and may also send the PDSCH in a unicast manner to specific UEs.

A number of resource elements may be available in each symbol period. Each resource element (RE) may cover one subcarrier in one symbol period and may be used to send one modulation symbol, which may be a real or complex value. Resource elements not used for a reference signal in each symbol period may be arranged into resource element groups (REGs). Each REG may include four resource elements in one symbol period. The PCFICH may occupy four REGs, which may be spaced approximately equally across frequency, in symbol period 0. The PHICH may occupy three REGs, which may be spread across frequency, in one or more configurable symbol periods. For example, the three REGs for the PHICH may all belong in symbol period 0 or may be spread in symbol periods 0, 1, and 2. The PDCCH may occupy 9, 18, 36, or 72 REGs, which may be selected from the available REGs, in the first M symbol periods, for example. Only certain combinations of REGs may be allowed for the PDCCH.

A UE may know the specific REGs used for the PHICH and the PCFICH. The UE may search different combinations of REGs for the PDCCH. The number of combinations to search is typically less than the number of allowed combinations for the PDCCH. An eNB may send the PDCCH to the UE in any of the combinations that the UE will search.

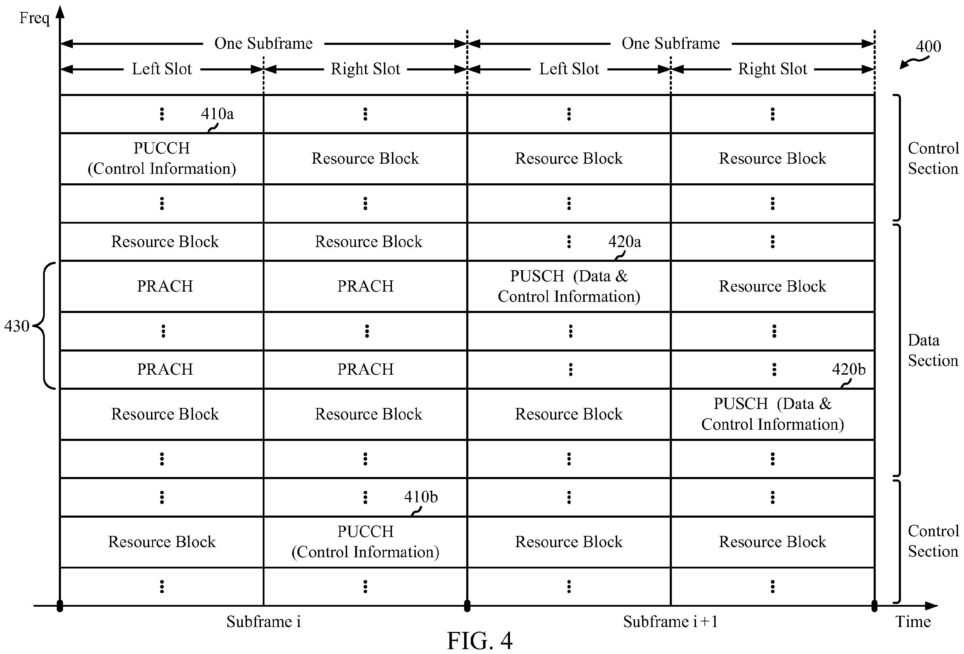

FIG. 4 is a diagram 400 illustrating an example of an UL frame structure in LTE. The available resource blocks for the UL may be partitioned into a data section and a control section. The control section may be formed at the two edges of the system bandwidth and may have a configurable size. The resource blocks in the control section may be assigned to UEs for transmission of control information. The data section may include all resource blocks not included in the control section. The UL frame structure results in the data section including contiguous subcarriers, which may allow a single UE to be assigned all of the contiguous subcarriers in the data section.

A UE may be assigned resource blocks 410a, 410b in the control section to transmit control information to an eNB. The UE may also be assigned resource blocks 420a, 420b in the data section to transmit data to the eNB. The UE may transmit control information in a physical UL control channel (PUCCH) on the assigned resource blocks in the control section. The UE may transmit only data or both data and control information in a physical UL shared channel (PUSCH) on the assigned resource blocks in the data section. A UL transmission may span both slots of a subframe and may hop across frequency.

A set of resource blocks may be used to perform initial system access and achieve UL synchronization in a physical random access channel (PRACH) 430. The PRACH 430 carries a random sequence and cannot carry any UL data/signaling. Each random access preamble occupies a bandwidth corresponding to six consecutive resource blocks. The starting frequency is specified by the network. That is, the transmission of the random access preamble is restricted to certain time and frequency resources. There is no frequency hopping for the PRACH. The PRACH attempt is carried in a single subframe (1 ms) or in a sequence of few contiguous subframes and a UE can make only a single PRACH attempt per frame (10 ms).

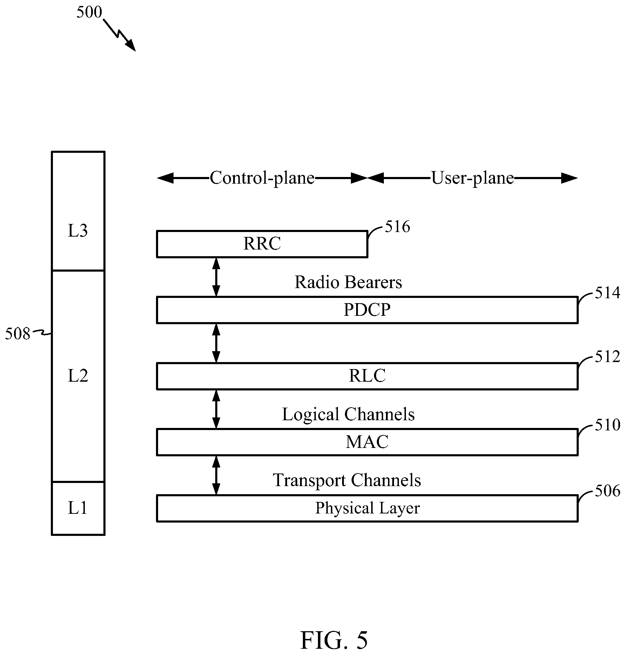

FIG. 5 is a diagram 500 illustrating an example of a radio protocol architecture for the user and control planes in LTE. The radio protocol architecture for the UE and the eNB is shown with three layers: Layer 1, Layer 2, and Layer 3. Layer 1 (L1 layer) is the lowest layer and implements various physical layer signal processing functions. The L1 layer will be referred to herein as the physical layer 506. Layer 2 (L2 layer) 508 is above the physical layer 506 and is responsible for the link between the UE and eNB over the physical layer 506.

In the user plane, the L2 layer 508 includes a media access control (MAC) sublayer 510, a radio link control (RLC) sublayer 512, and a packet data convergence protocol (PDCP) 514 sublayer, which are terminated at the eNB on the network side. Although not shown, the UE may have several upper layers above the L2 layer 508 including a network layer (e.g., IP layer) that is terminated at the PDN gateway 118 on the network side, and an application layer that is terminated at the other end of the connection (e.g., far end UE, server, etc.).

The PDCP sublayer 514 provides multiplexing between different radio bearers and logical channels. The PDCP sublayer 514 also provides header compression for upper layer data packets to reduce radio transmission overhead, security by ciphering the data packets, and handover support for UEs between eNBs. The RLC sublayer 512 provides segmentation and reassembly of upper layer data packets, retransmission of lost data packets, and reordering of data packets to compensate for out-of-order reception due to hybrid automatic repeat request (HARQ). The MAC sublayer 510 provides multiplexing between logical and transport channels. The MAC sublayer 510 is also responsible for allocating the various radio resources (e.g., resource blocks) in one cell among the UEs. The MAC sublayer 510 is also responsible for HARQ operations.

In the control plane, the radio protocol architecture for the UE and eNB is substantially the same for the physical layer 506 and the L2 layer 508 with the exception that there is no header compression function for the control plane. The control plane also includes a radio resource control (RRC) sublayer 516 in Layer 3 (L3 layer). The RRC sublayer 516 is responsible for obtaining radio resources (i.e., radio bearers) and for configuring the lower layers using RRC signaling between the eNB and the UE.

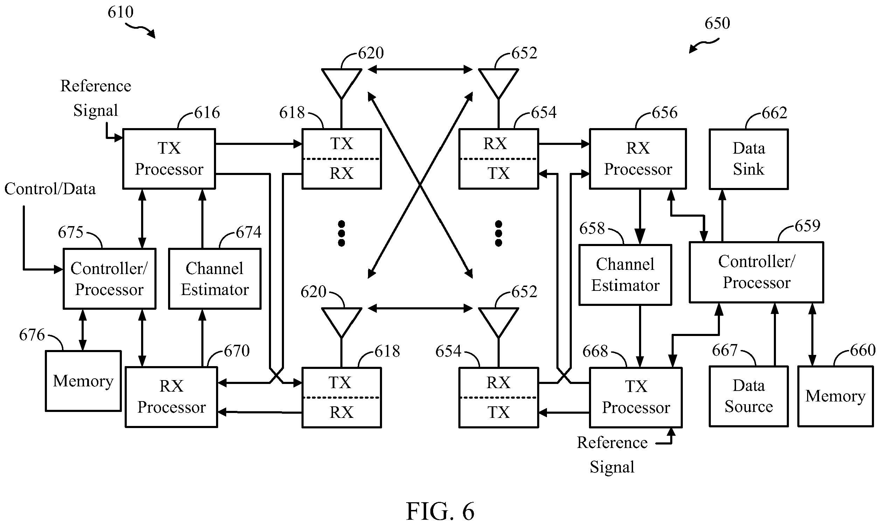

FIG. 6 is a block diagram of an eNB 610 in communication with a UE 650 in an access network. In the DL, upper layer packets from the core network are provided to a controller/processor 675. The controller/processor 675 implements the functionality of the L2 layer. In the DL, the controller/processor 675 provides header compression, ciphering, packet segmentation and reordering, multiplexing between logical and transport channels, and radio resource allocations to the UE 650 based on various priority metrics. The controller/processor 675 is also responsible for HARQ operations, retransmission of lost packets, and signaling to the UE 650.

The TX processor 616 implements various signal processing functions for the L1 layer (i.e., physical layer). The signal processing functions includes coding and interleaving to facilitate forward error correction (FEC) at the UE 650 and mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols are then split into parallel streams. Each stream is then mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 674 may be used to determine the coding and modulation scheme, as well as for spatial processing. The channel estimate may be derived from a reference signal and/or channel condition feedback transmitted by the UE 650. Each spatial stream is then provided to a different antenna 620 via a separate transmitter 618TX. Each transmitter 618TX modulates an RF carrier with a respective spatial stream for transmission.

At the UE 650, each receiver 654RX receives a signal through its respective antenna 652. Each receiver 654RX recovers information modulated onto an RF carrier and provides the information to the receiver (RX) processor 656. The RX processor 656 implements various signal processing functions of the L1 layer. The RX processor 656 performs spatial processing on the information to recover any spatial streams destined for the UE 650. If multiple spatial streams are destined for the UE 650, they may be combined by the RX processor 656 into a single OFDM symbol stream. The RX processor 656 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, is recovered and demodulated by determining the most likely signal constellation points transmitted by the eNB 610. These soft decisions may be based on channel estimates computed by the channel estimator 658. The soft decisions are then decoded and deinterleaved to recover the data and control signals that were originally transmitted by the eNB 610 on the physical channel. The data and control signals are then provided to the controller/processor 659.

The controller/processor 659 implements the L2 layer. The controller/processor can be associated with a memory 660 that stores program codes and data. The memory 660 may be referred to as a computer-readable medium. In the UL, the control/processor 659 provides demultiplexing between transport and logical channels, packet reassembly, deciphering, header decompression, control signal processing to recover upper layer packets from the core network. The upper layer packets are then provided to a data sink 662, which represents all the protocol layers above the L2 layer. Various control signals may also be provided to the data sink 662 for L3 processing. The controller/processor 659 is also responsible for error detection using an acknowledgement (ACK) and/or negative acknowledgement (NACK) protocol to support HARQ operations.

In the UL, a data source 667 is used to provide upper layer packets to the controller/processor 659. The data source 667 represents all protocol layers above the L2 layer. Similar to the functionality described in connection with the DL transmission by the eNB 610, the controller/processor 659 implements the L2 layer for the user plane and the control plane by providing header compression, ciphering, packet segmentation and reordering, and multiplexing between logical and transport channels based on radio resource allocations by the eNB 610. The controller/processor 659 is also responsible for HARQ operations, retransmission of lost packets, and signaling to the eNB 610.

Channel estimates derived by a channel estimator 658 from a reference signal or feedback transmitted by the eNB 610 may be used by the TX processor 668 to select the appropriate coding and modulation schemes, and to facilitate spatial processing. The spatial streams generated by the TX processor 668 are provided to different antenna 652 via separate transmitters 654TX. Each transmitter 654TX modulates an RF carrier with a respective spatial stream for transmission.

The UL transmission is processed at the eNB 610 in a manner similar to that described in connection with the receiver function at the UE 650. Each receiver 618RX receives a signal through its respective antenna 620. Each receiver 618RX recovers information modulated onto an RF carrier and provides the information to a RX processor 670. The RX processor 670 may implement the L1 layer.

The controller/processor 675 implements the L2 layer. The controller/processor 675 can be associated with a memory 676 that stores program codes and data. The memory 676 may be referred to as a computer-readable medium. In the UL, the control/processor 675 provides demultiplexing between transport and logical channels, packet reassembly, deciphering, header decompression, control signal processing to recover upper layer packets from the UE 650. Upper layer packets from the controller/processor 675 may be provided to the core network. The controller/processor 675 is also responsible for error detection using an ACK and/or NACK protocol to support HARQ operations.

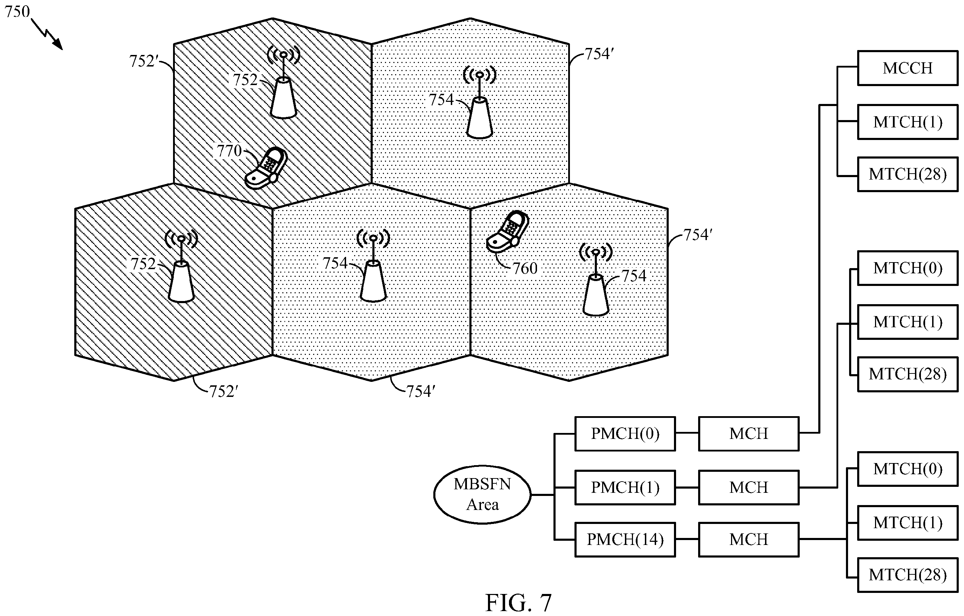

FIG. 7 is a diagram 750 illustrating evolved Multicast Broadcast Multimedia Service (eMBMS) in a Multi-Media Broadcast over a Single Frequency Network (MBSFN). The eNBs 752 in cells 752' may form a first MBSFN area and the eNBs 754 in cells 754' may form a second MBSFN area. The eNBs 752, 754 may be associated with other MBSFN areas, for example, up to a total of eight MBSFN areas. A cell within an MBSFN area may be designated a reserved cell. Reserved cells do not provide multicast/broadcast content, but are time-synchronized to the cells 752', 754' and have restricted power on MBSFN resources in order to limit interference to the MBSFN areas. Each eNB in an MBSFN area synchronously transmits the same eMBMS control information and data. Each area may support broadcast, multicast, and unicast services. A unicast service is a service intended for a specific user, e.g., a voice call. A multicast service is a service that may be received by a group of users, e.g., a subscription video service. A broadcast service is a service that may be received by all users, e.g., a news broadcast. Referring to FIG. 7, the first MBSFN area may support a first eMBMS broadcast service, such as by providing a particular news broadcast to UE 770. The second MBSFN area may support a second eMBMS broadcast service, such as by providing a different news broadcast to UE 760. Each MBSFN area supports a plurality of physical multicast channels (PMCH) (e.g., 15 PMCHs). Each PMCH corresponds to a multicast channel (MCH). Each MCH can multiplex a plurality (e.g., 29) of multicast logical channels. Each MBSFN area may have one multicast control channel (MCCH). As such, one MCH may multiplex one MCCH and a plurality of multicast traffic channels (MTCHs) and the remaining MCHs may multiplex a plurality of MTCHs.

### Example Methods and Apparatus for Transmission Restriction and Efficient Signaling

Techniques and apparatus are provided herein for restriction of system operating parameters and sending the restricted set of parameters to a receiver for efficient signaling. According to certain aspects of the present disclosure a serving cell may determine a restricted set of system operating parameters for the cell and for potentially inferring neighboring cells. The serving cell may signal the restricted set of system operating parameters to a receiver to be used for interference management and thus, more efficient signaling.

In order to allow for flexible operation, long-term evolution (LTE) transmitters typically have many system operation parameter options. For example, an evolved Node B (eNB) may have 8 different traffic to reference signal power (TPR) values and 10 transmission modes to use for a particular user equipment (UE). The eNB may also have 4 resource allocation types to use for a downlink data transmission (e.g., type 0, type 1, type 2 localized, and type 2 distributed).

From the receiver perspective, knowing interfering signals' properties can make processing more efficient. For example, in LTE, if the UE knows that an interfering cell does not use resource allocation type 2, the UE may perform a better noise estimation by using a reference signal in both slots in one resource block (RB).

Accordingly, what is needed are techniques for informing the UE of the operating parameters used by potentially interfering cells.

Techniques are provided herein for restriction and/or exclusion of unused system parameters at the transmitter side and signaling to convey the information to a receiver such that a receiver can utilize such restriction/exclusion to optimize receiver performance.

FIG.. 8 illustrates example components of a wireless communication system 800, in accordance with certain aspects of the present disclosure. In the illustrated example, UE 806 is in proximity to a serving base station 804. Potentially interfering transmissions are indicated with a dashed line. As illustrated, system 800 includes the BS 804 and a neighbor base station 802 of a first cell (e.g., a relatively distant base station serving the UE 806). In some cases, the serving BS 804 may listen for transmissions from the neighbor BS 802 to gather information regarding the neighbor BS's system operating parameters.

According to certain aspects, the serving BS 804 and/or neighboring BSs (e.g., BS 802) may utilize a restricted set of parameters. Restriction means that a subset of possible values/modes may be used when transmitting a signal to intended receivers (e.g., such as UE 806). For example, a transmitter may use a restricted set of Pa and Pb values. Pa and Pb values are used in LTE to adjust power. In aspects, a transmitter (e.g., BS 802 or 804) may use a restricted set of Pa values. The transmitter may use a subset of only *N* Pa values of 8 possible values, where *N* is no more than 8 and no less than 1. In aspects, the transmitter (e.g., BS 802 or 804) may use a restricted set of Pb values. The transmitter may use a subset of only *M* Pb values of 4 possible values, where *M* is no more than 4 and no less than 1.

According to certain aspects, when quadrature phase-shift keying (QPSK) modulation and Rank 1 transmission is used, the traffic-to-pilot ratio (TPR) value for control and data may be limited to a finite number of values or limited to a range. In aspects, there may be a different restricted set of parameters used for Unicast transmissions than that used for Broadcast transmissions.

According to certain aspects, the transmitter (e.g., BS 802 or 804) may use a restricted set of transmission modes (TMs). For example, the transmitter may use only two transmission modes, such as TM2 and TM3 for a 2x2 system. In another example, the transmitter may use three transmission modes, such as TM2, TM3, and TM4. In another example, the transmitter may use 4 transmission modes, such as TM2, TM3, TM4 and TM8.

According to certain aspects, the transmitter (e.g., BS 802 or 804) may use a restricted set of resource allocation types. For example, the transmitter may only use 2 resource allocation types, such as Type 0 and Type 2 localized. In another example, the transmitter may only use 3 resource allocation types, such as Type 0, type 1 and Type 2 localized.

According to certain aspects, various system operation modes/scenarios may trigger such restriction and/or exclusion of operational parameters. For example, in duplex mode TM7 may be excluded in frame structure type 1 (FS1) while allowed in FS2. In another example, type 2 resource allocation type may be restricted to broadcast channels and not allowed in unicast channel transmissions.

According to certain aspects, restrictions and/or exclusions may be applicable to a subset of sub frames, a subset of hybrid automatic repeat request (HARQ) processes, or a specific operation mode. For example, if the UE (e.g., UE 806) is configured for two channel state information (CSI) processes (e.g., further enhanced inter-cell interference coordination (FeICIC)), those restrictions and/or exclusions may take effect.

According to certain aspects, restrictions and/or exclusions may be linked to transmission type (e.g., cell-specific reference signal (CRS)-based transmission or UE-RS based transmission). In aspects, restrictions and/or exclusions may be linked to virtual cell ID (VCID) or physical cell identity (PCI). For example, a different set of restrictions and/or exclusions may be used for VCID or PCI than for a different VCID or PCI.

According to certain aspects, the transmitter (e.g., BS 802 or 804) may signal the restricted/excluded set of parameters to the receiver (e.g., UE 806) via a broadcast channel, radio resource control (RRC) signaling, or Layer 1 signaling. In aspects, the parameters may be signaled via a backhaul between BSs.

In aspects, restrictions and/or exclusions may be signaled using a bitmap to indicate whether a parameter is allowed or restricted. For example, the transmitter (e.g., BS 802 or 804) may use 11 bits to signal allowed transmission modes where each bit represents a possible transmission mode. In aspects, the transmitter may use an index to indicate which entry in a table is used wherein the table includes different combinations of allowed parameters. In one example, an index number 0 may indicate that TM2 and TM3 are allowed TM modes and 0dB and 3dB are allowed Pa values. An index number 1 may indicate TM2, TM4, and TM8 TM modes are allowed and -3dB and 0dB Pa values are allowed. In another example, an index number of 0 may indicate TM2 and TM3 TM modes are allowed, 0dB and 3dB Pa values are allowed, and Type 0 and Type 1 resource allocation types are allowed. An index number of 1 may indicate TM2, TM4, and TM8 TM modes are allowed, -3dB and 0dB Pa values are allowed, and Type 1 and Type 2 localized resource allocation types are allowed. In another example, an index number of 0 may indicate TM2 and TM3 TM modes are allowed, 0dB and 3dB Pa values are allowed, Type 0 and Type 1 resource allocation types are allowed, and X and Y virtual cell IDs are allowed. An index number of 1 may indicate TM2, TM4, and TM8 TM modes are allowed, -3dB and 0dB Pa values are allowed, Type 1 and Type 2 localized resource allocation types are allowed, and X, Y, and Z virtual cell IDs are allowed.

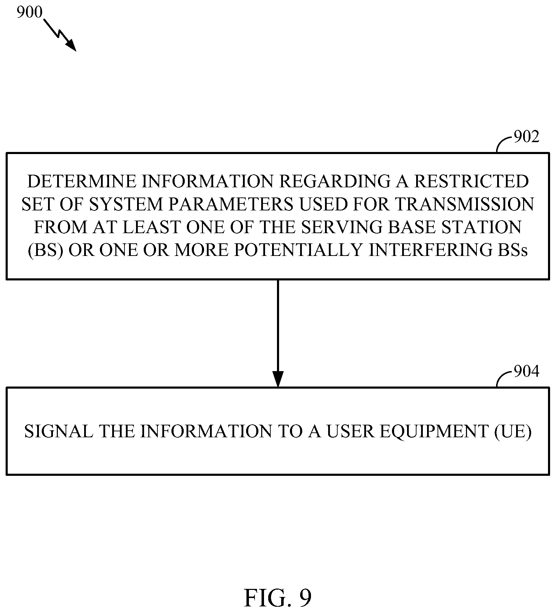

FIG. 9 shows a flow diagram illustrating example operations 900 for wireless communications, in accordance with certain aspects of the present disclosure. The operations 900 may be performed, for example, by a serving BS (e.g., BS 804). The operations 900 may begin, at 902, by determining information regarding a restricted set of system parameters used for transmission from at least one of the serving BS or one or more potentially interfering BSs. For example, the restricted set of system parameters may include a subset of available traffic to reference signal power (TPR) values, a subset of available transmissions modes, and/or a subset of available resource allocation types. In aspects, the restricted set of system parameters may be selectively used for a subset of sub frames, a subset of HARQ processes, or a subset of one or more operation modes.

In aspects, the BS may determine information for different restricted sets of system parameters used for different types of transmissions (e.g., unicast, broadcast, CRS-based, and/or UE-RS based transmissions). In aspects, the BS may determine information for different restricted sets of system parameters used for different cell IDs (e.g., VCIDs or PCIs).

At 904, the BS may signal signaling (e.g., via RRC, Layer 1, or broadcast signaling) the information to a UE. According to certain aspects, the signaling is via a backhaul between eNBs. In aspects, the BS may signal a bitmap to indicate whether a particular parameter is part of the restricted set of system parameters used for transmission. Alternatively, the BS may signal an index value, selected from a plurality of index values, each representing a combination (e.g., of different types of system parameters) of allowable system parameter in the restricted set. In aspects, each combination may include at least two of: one or more allowable transmission modes, one or more allowable transmission power values, and/or one or more allowable resource allocation types.

According to certain aspects, the BS may first detect one or more conditions that trigger determining the information and signaling the information to a UE. For example, the BS may detect use of a particular duplex mode or whether a transmission is broadcast or unicast.

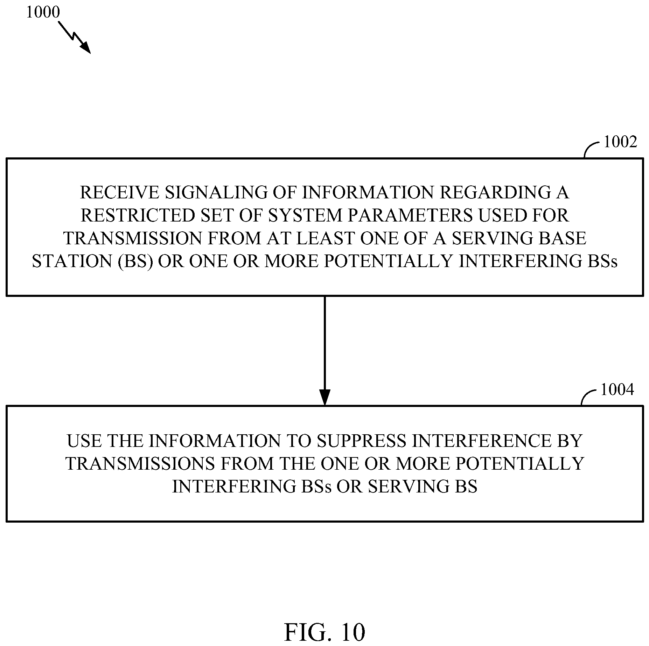

FIG. 10 shows a flow diagram illustrating example operations 1000 for wireless communications), in accordance with certain aspects of the present disclosure. The operations 1000 may be performed, for example, by a UE (e.g., UE 806). The operations 1000 may begin, at 1002, by receiving signaling (e.g., via RRC, Layer 1, or broadcast signaling) of information regarding a restricted set of system parameters used for transmission from at least one of a serving BS or one or more potentially interfering BSs. For example, the restricted set of system parameters may include a subset of available (TPR values, a subset of available transmissions modes, and/or a subset of available resource allocation types. In aspects, the restricted set of system parameters may be selectively used for a subset of subframes, a subset of HARQ processes, or a subset of one or more operation modes.

In aspects, the UE may receive information for different restricted sets of system parameters used for different types of transmissions (e.g., unicast, broadcast, CRS-based, and/or UE-RS based transmissions). In aspects, the UE may receive information for different restricted sets of system parameters used for different cell IDs (e.g., VCIDs or PCIs).

According to certain aspects, the determination comprises receiving signaling via a backhaul between eNBs. In aspects, the UE may receive a bitmap to indicate whether a particular parameter is part of the restricted set of system parameters used for transmission. Alternatively, the UE may receive an index value, selected from a plurality of index values, each representing a combination (e.g., of different types of system parameters) of allowable system parameter in the restricted set. In aspects, each combination may include at least two of: one or more allowable transmission modes, one or more allowable transmission power values, and/or one or more allowable resource allocation types.

According to certain aspects, the UE may first detect one or more conditions that trigger determining the information and signaling the information to the UE. For example, the UE may detect use of a particular duplex mode or whether a transmission is broadcast or unicast.

At 1004, the UE may use the information to suppress interference by transmissions from the one or more potentially interfering BSs or serving BS.

It is understood that the specific order or hierarchy of steps in the processes disclosed is an illustration of exemplary approaches. Based upon design preferences, it is understood that the specific order or hierarchy of steps in the processes may be rearranged. Further, some steps may be combined or omitted. The accompanying method claims present elements of the various steps in a sample order, and are not meant to be limited to the specific order or hierarchy presented.

As used herein, including in the claims, "or" as used in a list of items (for example, a list of items prefaced by a phrase such as "at least one of' or "one or more of') indicates a disjunctive list such that, for example, a list of "at least one of A, B, or C" means A or B or C or AB or AC or BC or ABC (i.e., A and B and C).

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." Unless specifically stated otherwise, the term "some" refers to one or more. All structural and functional equivalents to the elements of the various aspects described throughout this disclosure that are known or later come to be known to those of ordinary skill in the art are intended to be encompassed by the claims. Moreover, nothing disclosed herein is intended to be dedicated to the public regardless of whether such disclosure is explicitly recited in the claims. No claim element is to be construed as a means plus function unless the element is expressly recited using the phrase "means for."

## Claims

1. A method (900) for wireless communications by a serving base station (BS), comprising:
determining (902) information regarding a restricted set of system parameters used for transmission from at least one of the serving BS or one or more potentially interfering BSs, wherein the restricted set of system parameters include at least one of a subset of available traffic to pilot, TPR, values, or a subset of available transmissions modes; and
signaling (904) the information to a user equipment, UE, for using the information to suppress interference by transmissions from the one or more potentially interfering BSs or serving BS.

2. The method (900) of claim 1, wherein the determining comprises receiving the information via a backhaul between BSs.

3. The method (900) of claim 1, wherein the restricted set of system parameters is selectively used for at least one of a subset of subframes, a subset of hybrid automatic repeat request, HARQ, processes, or a subset of one or more operation modes.

4. The method (900) of claim 1, wherein the signaling comprises at least one of broadcast signaling, radio resource control, RRC, signaling, or Layer 1 signaling.

5. The method (900) of claim 1, wherein the information comprises a bitmap to indicate whether a particular parameter is part of the restricted set of system parameters used for transmission.

6. An apparatus for wireless communications by a serving base station, BS (804), comprising:
at least one processor configured to:
determine information regarding a restricted set of system parameters used for transmission from at least one of the serving BS (804) or one or more potentially interfering BSs, wherein the restricted set of system parameters include at least one of a subset of available traffic to pilot, TPR, values, or a subset of available transmissions modes; and
signal the information to a user equipment, UE (806), for using (1004) the information to suppress interference by transmissions from the one or more potentially interfering BSs or serving BS; and
a memory coupled with the at least one processor.

7. The apparatus of claim 6, wherein the restricted set of system parameters is selectively used for at least one of a subset of subframes, a subset of hybrid automatic repeat request, HARQ, processes, or a subset of one or more operation modes.

8. The apparatus of claim 6, wherein the information comprises a bitmap to indicate whether a particular parameter is part of the restricted set of system parameters used for transmission.

9. The apparatus of claim 6, wherein the information comprises an index value, selected from a plurality of index values, each representing a combination of allowable system parameter in the restricted set.

10. The apparatus of claim 6, wherein the determining comprises determining information for different restricted sets of system parameters used for different types of transmissions.

11. A method (1000) for wireless communications by a user equipment, UE, comprising:
receiving (1002) signaling of information regarding a restricted set of system parameters used for transmission from at least one of a serving base station, BS, or one or more potentially interfering BSs, wherein the restricted set of system parameters include at least one of a subset of available traffic to pilot, TPR, values, or a subset of available transmissions modes; and
using (1004) the information to suppress interference by transmissions from the one or more potentially interfering BSs or serving BS.

12. The method (1000) of claim 11, wherein the restricted set of system parameters is selectively used for at least one of a subset of subframes, a subset of hybrid automatic repeat request, HARQ, processes, or a subset of one or more operation modes.

13. The method (1000) of claim 11, wherein the information comprises a bitmap to indicate whether a particular parameter is part of the restricted set of system parameters used for transmission.

14. The method (1000) of claim 11, wherein the information comprises an index value, selected from a plurality of index values, each representing a combination of allowable system parameter in the restricted set.

15. An apparatus for wireless communications by a user equipment, UE (806), comprising:
at least one processor configured to:
receive signaling of information regarding a restricted set of system parameters used for transmission from at least one of a serving base station, BS (804), or one or more potentially interfering BSs, wherein the restricted set of system parameters include at least one of a subset of available traffic to pilot, TPR, values, or a subset of available transmissions modes; and
use the information to suppress interference by transmissions from the one or more potentially interfering BSs or serving BS (804).

## Patentansprüche

1. Verfahren (900) zur drahtlosen Kommunikation durch eine dienende Basisstation (BS), aufweisend:
Ermitteln (902) von Information bezüglich einer eingeschränkten Menge von Systemparametern, welche für Übertragung von zumindest einer der dienenden BS oder einer oder mehrerer möglicher interferierender BS verwendet werden, wobei die eingeschränkte Menge von Systemparametern zumindest eines aus einer Untermenge von verfügbaren Verkehr-zu-Pilot-, TPR-Werten, oder einer Untermenge von verfügbaren Übertragungsarten aufweist; und
Signalisieren (904) der Information an ein Benutzerendgerät, UE, zur Verwendung der Information, um Interferenz durch die Übertragung von den einen oder mehreren möglichen interferierenden BS oder der dienenden BS zu unterdrücken.

2. Verfahren (900) nach Anspruch 1, wobei das Ermitteln das Empfangen der Information über eine Rücktransporteinrichtung zwischen Basisstationen umfasst.

3. Verfahren (900) nach Anspruch 1, wobei die eingeschränkte Menge von Systemparametern selektiv für zumindest eines aus einer Untermenge von Unterrahmen, einer Untermenge von hybriden automatischen Wiederholungsanforderungs-, HARQ-Prozessen, oder einer Untermenge von einer oder mehrerer Betriebsarten verwendet wird.

4. Verfahren (900) nach Anspruch 1, wobei das Signalisieren zumindest eines von einer Broadcastsignalisierung, Funkressourcensteuerungs-, RRC-Signalisierung, oder Schicht 1-Signalisierung umfasst.

5. Verfahren (900) nach Anspruch 1, wobei die Information eine Bitmap umfasst, um anzuzeigen, ob ein bestimmter Parameter Teil der eingeschränkten Menge von Systemparametern ist, welche für die Übertragung verwendet werden.

6. Vorrichtung zur drahtlosen Kommunikation durch eine dienende Basisstation, BS (804), aufweisend:
zumindest einen Prozessor, welcher eingerichtet ist zum:
Ermitteln von Information bezüglich einer eingeschränkten Menge von Systemparametern, welche für Übertragung von zumindest einer der dienenden BS (804) oder einer oder mehrerer möglicher interferierender BS verwendet werden, wobei die eingeschränkte Menge von Systemparametern zumindest eines aus einer Untermenge von verfügbaren Verkehr-zu-Pilot-, TPR-Werten, oder einer Untermenge von verfügbaren Übertragungsarten aufweist; und
Signalisieren der Information an ein Benutzerendgerät, UE (806), zur Verwendung (1004) der Information, um Interferenz durch die Übertragung von den einen oder mehreren möglichen interferierenden BS oder der dienenden BS zu unterdrücken; und
ein Speicher, welcher mit dem zumindest einen Prozessor gekoppelt ist.

7. Vorrichtung nach Anspruch 6, wobei die eingeschränkte Menge von Systemparametern selektiv für zumindest eines aus einer Untermenge von Unterrahmen, einer Untermenge von hybriden automatischen Wiederholungsanforderungs-, HARQ-Prozessen, oder einer Untermenge von einer oder mehrerer Betriebsarten verwendet wird.

8. Vorrichtung nach Anspruch 6, wobei die Information eine Bitmap umfasst, um anzuzeigen, ob ein bestimmter Parameter Teil der eingeschränkten Menge von Systemparametern ist, welche für die Übertragung verwendet wird.

9. Vorrichtung nach Anspruch 6, wobei die Information einen Indexwert umfasst, welcher aus einer Vielzahl von Indexwerten ausgewählt wird, von denen jeder eine Kombination von erlaubten Systemparametern in der eingeschränkten Menge repräsentiert.

10. Vorrichtung nach Anspruch 6, wobei das Ermitteln umfasst Ermitteln von Information für verschiedene eingeschränkte Mengen von Systemparametern, welche für verschiedene Arten von Übertragungen verwendet werden.

11. Verfahren (1000) zur drahtlosen Kommunikation durch ein Benutzerendgerät, UE, aufweisend:
Empfangen (1002) von Signalisierung von Information bezüglich einer eingeschränkten Menge von Systemparametern, welche für die Übertragung von zumindest einer dienenden Basisstation, BS, oder einer oder mehrerer möglichen interferierenden BS verwendet wird, wobei die eingeschränkte Menge von Systemparametern zumindest eines aus einer Untermenge von verfügbaren Verkehr-zu-Pilot-, TPR-Werten, oder einer Untermenge von verfügbaren Übertragungsarten aufweist; und
Verwenden (1004) der Information, um Interferenz durch Übertragungen von den einen oder mehreren möglichen interferierenden BS oder der dienenden BS zu unterdrücken.

12. Verfahren (1000) nach Anspruch 11, wobei die eingeschränkte Menge von Systemparametern selektiv für zumindest eines aus einer Untermenge von Unterrahmen, einer Untermenge von hybriden automatischen Wiederholungsanforderungs-, HARQ-Prozessen, oder einer Untermenge von einer oder mehrerer Betriebsarten verwendet wird.

13. Verfahren (1000) nach Anspruch 11, wobei die Information eine Bitmap umfasst, um anzuzeigen, ob ein bestimmter Parameter Teil der eingeschränkten Menge von Systemparametern ist, welche für die Übertragung verwendet wird.

14. Verfahren (1000) nach Anspruch 11, wobei die Information einen Indexwert umfasst, welcher aus einer Vielzahl von Indexwerten ausgewählt wird, von denen jeder eine Kombination von erlaubten Systemparametern in der eingeschränkten Menge repräsentiert.

15. Vorrichtung zur drahtlosen Kommunikation durch ein Benutzerendgerät, UE (806), aufweisend:
zumindest einen Prozessor, welcher eingerichtet ist zum:
Empfangen von Signalisierung von Information bezüglich einer eingeschränkten Menge von Systemparametern, welche für die Übertragung von zumindest einer dienenden Basisstation, BS, oder einer oder mehrerer möglichen interferierenden BS verwendet wird, wobei die eingeschränkte Menge von Systemparametern zumindest eines aus einer Untermenge von verfügbaren Verkehr-zu-Pilot-, TPR-Werten, oder einer Untermenge von verfügbaren Übertragungsarten aufweist; und
Verwenden der Information, um Interferenz durch Übertragungen von den einen oder mehreren möglichen interferierenden BS oder der dienenden BS (804) zu unterdrücken.

## Revendications

1. Procédé (900) pour des communications sans fil par une station de base (BS) de desserte, comprenant :
la détermination (902) d'informations concernant un ensemble limité de paramètres de système utilisés pour une transmission à partir d'au moins une parmi la BS de desserte ou une ou plusieurs BS potentiellement interférentes, dans lequel l'ensemble limité de paramètres de système inclut au moins un parmi un sous-ensemble de valeurs de trafic à pilote, TPR, disponibles ou un sous-ensemble de modes de transmission disponibles ; et
la signalisation (904) des informations à un équipement utilisateur, UE, pour utiliser les informations pour supprimer une interférence par des transmissions provenant des une ou plusieurs BS potentiellement interférentes ou de la BS de desserte.

2. Procédé (900) selon la revendication 1, dans lequel la détermination comprend la réception des informations via une liaison terrestre entre des BS.

3. Procédé (900) selon la revendication 1, dans lequel l'ensemble limité de paramètres de système est utilisé de manière sélective pour au moins un parmi un sous-ensemble de sous-trames, un sous-ensemble de processus de requête de répétition automatique hybride, HARQ, ou un sous-ensemble d'un ou plusieurs modes de fonctionnement.

4. Procédé (900) selon la revendication 1, dans lequel la signalisation comprend au moins une parmi une signalisation broadcast, une signalisation de contrôle de ressources radio, RRC, ou une signalisation de Couche 1.

5. Procédé (900) selon la revendication 1, dans lequel les informations comprennent un tableau de bits pour indiquer si un paramètre particulier fait ou non partie de l'ensemble limité de paramètres de système utilisés pour la transmission.

6. Appareil pour des communications sans fil par une station de base, BS, de desserte (804), comprenant :
au moins un processeur configuré pour :
déterminer des informations concernant un ensemble limité de paramètres de système utilisés pour une transmission à partir d'au moins une parmi la BS de desserte (804) ou une ou plusieurs BS potentiellement interférentes, dans lequel l'ensemble limité de paramètres de système inclut au moins un parmi un sous-ensemble de valeurs de trafic à pilote, TPR, disponibles ou un sous-ensemble de modes de transmission disponibles ; et
signaler les informations à un équipement utilisateur, UE (806), pour utiliser (1004) les informations pour supprimer une interférence par des transmissions provenant des une ou plusieurs BS potentiellement interférentes ou de la BS de desserte ; et
une mémoire couplée à l'au moins un processeur.

7. Appareil selon la revendication 6, dans lequel l'ensemble limité de paramètres de système est utilisé de manière sélective pour au moins un parmi un sous-ensemble de sous-trames, un sous-ensemble de processus de requête de répétition automatique hybride, HARQ, ou un sous-ensemble d'un ou plusieurs modes de fonctionnement.

8. Appareil selon la revendication 6, dans lequel les informations comprennent un tableau de bits pour indiquer si un paramètre particulier fait ou non partie de l'ensemble limité de paramètres de système utilisés pour la transmission.

9. Appareil selon la revendication 6, dans lequel les informations comprennent une valeur d'indice sélectionnée parmi une pluralité de valeurs d'indice, chacune représentant une combinaison de paramètre de système admissible dans l'ensemble limité.

10. Appareil selon la revendication 6, dans lequel la détermination comprend la détermination d'informations pour différents ensembles limités de paramètres de système utilisés pour différents types de transmissions.

11. Procédé (1000) pour des communications sans fil par un équipement utilisateur, UE, comprenant :
la réception (1002) d'une signalisation d'informations concernant un ensemble limité de paramètres de système utilisés pour une transmission à partir d'au moins une parmi une station de base, BS, de desserte ou une ou plusieurs BS potentiellement interférentes, dans lequel l'ensemble limité de paramètres de système inclut au moins un parmi un sous-ensemble de valeurs de trafic à pilote, TPR, disponibles ou un sous-ensemble de modes de transmission disponibles ; et
l'utilisation (1004) des informations pour supprimer une interférence par des transmissions provenant des une ou plusieurs BS potentiellement interférentes ou de la BS de desserte.

12. Procédé (1000) selon la revendication 11, dans lequel l'ensemble limité de paramètres de système est utilisé de manière sélective pour au moins un parmi un sous-ensemble de sous-trames, un sous-ensemble de processus de requête de répétition automatique hybride, HARQ, ou un sous-ensemble d'un ou plusieurs modes de fonctionnement.

13. Procédé (1000) selon la revendication 11, dans lequel les informations comprennent un tableau de bits pour indiquer si un paramètre particulier fait ou non partie de l'ensemble limité de paramètres de système utilisés pour la transmission.

14. Procédé (1000) selon la revendication 11, dans lequel les informations comprennent une valeur d'indice sélectionnée parmi une pluralité de valeurs d'indice, chacune représentant une combinaison de paramètre de système admissible dans l'ensemble limité.

15. Appareil pour des communications sans fil par un équipement utilisateur, UE (806), comprenant :
au moins un processeur configuré pour :
recevoir une signalisation d'informations concernant un ensemble limité de paramètres de système utilisés pour une transmission à partir d'au moins une parmi une station de base, BS, de desserte (804), ou une ou plusieurs BS potentiellement interférentes, dans lequel l'ensemble limité de paramètres de système inclut au moins un parmi un sous-ensemble de valeurs de trafic à pilote, TPR, disponibles ou un sous-ensemble de modes de transmission disponibles ; et
utiliser les informations pour supprimer une interférence par des transmissions provenant des une ou plusieurs BS potentiellement interférentes ou de la BS de desserte (804).
